# EUROPEAN PATENT SPECIFICATION

(11) **EP 2 582 943 B1**
(45) Date of publication and mention of the grant of the patent: **08.11.2017**
(21) Application number: 11798462.5
(22) Date of filing: 20.06.2011
(51) Int. Cl.: F01N 3/20, F01N 9/00, F01N 11/00

(54) **METHOD AND DEVICE PERTAINING TO COOLING OF DOSING UNITS OF SCR SYSTEMS**
VERFAHREN UND VORRICHTUNG ZUR KÜHLUNG VON DOSIEREINHEITEN VON SCR-SYSTEMEN
PROCÉDÉ ET DISPOSITIF DE REFROIDISSEMENT D'UNITÉS DE DOSAGE DE SYSTÈMES DE RÉDUCTION CATALYTIQUE SÉLECTIVE (RCS)

(30) Priority: 21.06.2010 SE 1050639
(43) Date of publication of application: 24.04.2013
(73) Proprietor: Scania CV AB (publ), 151 87 Södertälje (SE)
(72) Inventor: LILJESTRAND, Andreas, S-151 45 Södertälje (SE); BREMBERG, Per, S-151 60 Södertälje (SE); CARLSSON, Ulf, S-152 30 Södertälje (SE); ERIKSSON, Lars, S-153 38 Järna (SE)
(74) Representative: Scania CV AB
(86) International application number: PCT/SE2011/050789
(87) International publication number: WO 2011/162692

(56) References cited:
- DE-A1-102004 050 022
- DE-A1-102007 000 666
- DE-A1-102007 039 794

## Description

### TECHNICAL FIELD

The present invention relates to a method pertaining to an SCR system for exhaust cleaning. The invention relates also to a computer programme product containing programme code for a computer for implementing a method according to the invention. The invention relates also to an SCR system for exhaust cleaning and a motor vehicle which is equipped with the SCR system.

### BACKGROUND

Vehicles today use, for example, urea as reductant in SCR (selective catalytic reduction) systems which comprise an SCR catalyst in which said reductant and NOx gas can react and be converted to nitrogen gas and water. Various types of reductants may be used in SCR systems. AdBlue is an example of a commonly used reductant.

One type of SCR system comprises a container which holds a reductant. The SCR system has also a pump adapted to drawing said reductant from the container via a suction hose and to supplying it via a pressure hose to a dosing unit situated adjacent to an exhaust system of the vehicle, e.g. adjacent to an exhaust pipe of the exhaust system. The dosing unit is adapted to injecting a necessary amount of reductant into the exhaust pipe upstream of the SCR catalyst according to operating routines which are stored in a control unit of the vehicle. To make it easier to regulate the pressure when there are small or no dosing amounts, the system also comprise a return hose which runs back to the container from a pressure side of the system. This configuration makes it possible to cool the dosing unit by means of the reductant which, during cooling, flows from the container via the pump and the dosing unit and back to the container. The dosing unit is thus provided with active cooling. The return flow from the dosing unit to the container may be substantially constant and is currently not controlled or regulated by means of appropriate valves or such units.

As the dosing unit is currently situated adjacent to the vehicle's exhaust system which becomes warm during operation of the vehicle, e.g. depending on the load, there is risk of the dosing valve becoming overheated. Overheating of the dosing unit may entail degradation of its functionality, potentially impairing its performance.

The dosing unit currently comprises electrical components, certain of them being provided with a circuit card. Said circuit card may for example be adapted to controlling the dosing of AdBlue to the vehicle's exhaust system. For various reasons, these electrical components are sensitive to high temperatures. Too high temperatures of the dosing unit may result in degradation of the electrical components, potentially leading to expensive repairs at a service workshop. Moreover, the reductant present in the dosing unit may at least partly crystallise at too high temperatures, potentially leading to obstruction of the dosing unit. It is therefore of the utmost importance that the temperature of the dosing unit of the SCR system should not exceed a critical level.

Cooling the dosing unit of a vehicle's SCR system currently takes place continuously during the vehicle's ordinary operation as a result of the reductant circulating within the SCR system as indicated above. Cooling the dosing unit during operation of the vehicle currently works satisfactorily.

After operation of the vehicle a large amount of thermal energy caused by its operation is stored in primarily the exhaust system. This thermal energy may be led to the dosing unit from, for example, a silencer and the SCR catalyst and may warm the dosing unit to a temperature which exceeds a critical value.

When the vehicle is switched off and the exhaust flow in the exhaust system consequently ceases, the reductant dosing unit is cooled for a predetermined time, e.g. about 30 minutes, by said reductant in the same way as during ordinary operation.

This arrangement entails certain disadvantages. One is a relatively large amount of energy used to power the pump in the SCR system after the vehicle has been switched off. Any vehicle battery used to power the pump of the SCR system might thus be discharged or reach an undesirably low charge level.

Another disadvantage of the dosing unit being cooled in the same way as during ordinary operation is that the pump of the SCR system emits disturbing noise which for example a driver of the vehicle may find irritating, particularly when he/she has to sleep in the cab after a driving run or is in the immediate vicinity of the vehicle.

There is thus a need to improve current methods for cooling the dosing unit in the SCR system after the vehicle has been switched off, in order to reduce or eliminate the above disadvantages.

DE 102007000666 A1 refers to a device for supply of reducing agent to an exhaust duct during catalytic exhaust cleaning and discusses cooling of an injection valve for reducing agent after the engine and consequently the exhaust flow have been switched off. The arrangement in DE 102007000666 A1 comprises a cooling jacket which for cooling purposes surrounds the injection valve and is adapted to having reducing agent flow through it. The primary focus here is on the temperature of the reducing agent, mainly by measurement.

### SUMMARY OF THE INVENTION

An object of the present invention is to propose a novel and advantageous method for improving the performance of an SCR system.
Another object of the present invention is to propose a novel and advantageous SCR system and a novel and advantageous computer programme for improving the performance of an SCR system.

An object of the present invention is to propose a novel and advantageous method for effecting cooling of a dosing unit of an SCR system after cessation of an exhaust flow therein.
Another object of the invention is to propose a novel and advantageous SCR system and a novel and advantageous computer programme for effecting cooling of a dosing unit of an SCR system after cessation of an exhaust flow in the SCR system.
A further object of the invention is to propose a method, SCR system and a computer programme for reducing the risk that a dosing unit in an SCR system might become overheated after cessation of an exhaust flow in the SCR system.
A further object of the invention is to propose an alternative method, an alternative SCR system and an alternative computer programme for reducing the risk that a dosing unit in an SCR system might become overheated after cessation of an exhaust flow in the SCR system.
These objects are achieved with a method pertaining to SCR systems for exhaust cleaning according to claim 1, as well as with an SCR system according to claim 7 and a computer programme according to claim 15. An aspect of the invention proposes a method for cooling a dosing unit pertaining to SCR systems for exhaust cleaning, comprising, after cessation of exhaust flow, the steps of cooling a reducing agent dosing unit by means of reducing agent supplied to it, and of intermittently running a feed device to supply said coolant reducing agent at reduced operating power compared with ordinary operation.

Intermittently running the feed device for said reducing agent results in a functionality of the SCR system which reduces or minimises the impact of the SCR system. The feed device may be run intermittently at an operating power which achieves desirable cooling of the dosing unit. The feed device may be run intermittently at reduced power compared with ordinary operation. This results in positive synergy effects according to the innovative method, e.g. a substantial reduction in energy consumption involved in the cooling process.

The feed device may be run intermittently with a predetermined interval configuration. This predetermined interval configuration may be defined as operation of the feed device being deactivated at certain periodicities and being subsequently reactivated.

This sequence of temporary deactivation and reactivation may be repeated until the dosing unit of the SCR system has reached a predetermined desirable temperature, e.g. 40 degrees Celsius.

This predetermined interval configuration may entail catering for rewarming effects of said dosing unit. As the dosing unit according to certain versions is fitted adjacent to an exhaust system which comprises for example an SCR catalyst and other components which may transfer stored thermal energy to the dosing unit, even after the latter has been cooled to a desirable temperature, it is advantageous to cater for these rewarming effects when determining said interval configuration.

Operation of the feed device may be activated on the basis of a measured temperature of at least one portion of said SCR system.

Operation of the feed device may result in cooling of said dosing unit to a temperature which is below a predetermined limit value.

Said reducing agent may be a fluid solution which contains urea, e.g. AdBlue.

To minimise the impact upon the vehicle, a proposed function causes operation of the pump of the feed device of the SCR system to be deactivated and reactivated any desired number of times during cooling of the dosing unit after the cessation of said exhaust flow. According to a version, the pump speed is lower or substantially lower than that employed during ordinary operation of the SCR system, which ordinary operation comprises operation of the SCR system when the vehicle is in motion, or previous ordinary operation of the SCR system during cooling of the dosing unit after the cessation of said exhaust flow.

With advantage, a previous need for electrical energy from a battery of the vehicle when its engine is off during the subsequent cooling procedure is reduced.

Maintaining intermittent operating power of the feed device, with substantially unchanged cooling power of the dosing unit, results in less noise than running the feed device at full power as previously. Part of the inventiveness of the present invention is that it has been found that the cooling power of the dosing unit is reduced only marginally when the feed device is run intermittently.

Applying reduced operating power of the feed device, with substantially unchanged cooling power of the dosing unit, results in less noise than running the feed device at full power as previously.

Despite the operating power of the feed device being reduced compared with ordinary operation and despite its being run intermittently, with substantially unchanged cooling power of the dosing unit, it is possible to avoid the reducing agent becoming crystallised as a result of too high temperatures and thereby causing obstruction of the dosing unit, potentially leading to expensive repairs of the SCR system.

By reducing the operating power of the feed device, with substantially unchanged cooling power of the dosing unit, temperature-related damage to the dosing unit's electrical components may with advantage be prevented.

Despite the feed device being run intermittently, with substantially unchanged cooling power of the dosing unit, temperature-related damage to the dosing unit's electrical components may with advantage be prevented.

Reducing the operating power of the feed device may entail running it at a lower speed than during ordinary operation. Reducing the power of the feed device may result in a lower pressure of the reducing agent towards the dosing unit than during ordinary operation.

According to an embodiment, the power of the feed device for said reducing agent is reduced in at least one stage to a level which results in substantially no change in the cooling power of the dosing unit but uses substantially less energy than in the state of the art.

The method may comprise the step of intermittently running said feed device at least possible power, with substantially unchanged cooling power of said dosing unit, for as long as cooling continues. With advantage, a cooling function is achieved whereby the cooling power of said dosing unit is substantially unchanged but the impact of the SCR system is decreased in a desirable way.

The step of running said feed device may comprise running it at a power corresponding to 10-30% of that during ordinary operation. With advantage, this results in a substantially reduction in the amount of energy required for adequate cooling of the dosing unit of the SCR system, particularly since the feed device is also run intermittently. According to a preferred embodiment, the step of running said feed device may comprise running it at a power corresponding to less than 10% of that during ordinary operation. According to an embodiment, the innovative method may result in a total energy saving of 10-50% compared with cooling methods according to the state of the art.

The method may further comprise the step of running said feed device on the basis of a measured temperature of at least one portion of said SCR system. Any adequate temperature of said at least one portion of said SCR system may be used such that cooling of the dosing unit can be switched off automatically when said temperature of the at least one portion of said SCR system is reached after cessation of the exhaust flow.

Running said feed device may entail catering for rewarming effects. Said predetermined period of time and said adequate temperature of the at least one portion of said SCR system may be predetermined by a computer model stored in a control unit of the vehicle on the basis of already known rewarming effects of the SCR system. The rewarming effects may be determined on the basis of predicted thermal energy storage in the SCR system.

The method is easy to implement in existing motor vehicles. Software pertaining to an SCR system for exhaust cleaning according to the invention may be installed in a control unit of the vehicle during the manufacture of the vehicle. A purchaser of the vehicle may thus have the possibility of selecting the function of the method as an option. Alternatively, software which comprises programme code for applying the innovative method pertaining to an SCR system for exhaust cleaning may be installed in a control unit of the vehicle on the occasion of upgrading at a service station, in which case the software may be loaded into a memory in the control unit. Implementing the innovative method is therefore cost-effective, particularly since the vehicle need not be provided with any further components or subsystems. Relevant hardware is currently already provided in the vehicle. The invention therefore represents a cost-effective solution to the problems indicated above.

Software comprising programme code for, after cessation of an exhaust flow, cooling a reducing agent dosing unit by means of reducing agent supplied to it, and for intermittently running a feed device to supply said coolant reducing agent and running said feed device at reduced power compared with ordinary operation, according to an aspect of the invention, is easy to update or replace. Moreover, various parts of the software containing programme code for applying the innovative method may be replaced independently of one another. This modular configuration is advantageous from a maintenance perspective.

An aspect of the invention proposes an SCR system for exhaust cleaning which comprises a coolable dosing unit, comprising means for, after cessation of exhaust flow, cooling a reducing agent dosing unit by means of reducing agent intended to be supplied to it, and means for intermittently running a feed device to supply said coolant reducing agent, for which purpose the feed device is adapted to being run at reduced power compared with ordinary operation.

The feed device may be adapted to being run at reduced power compared with ordinary operation.

The feed device may be adapted to being run intermittently with a predetermined interval configuration.

Said predetermined interval configuration may entail catering for rewarming effects of said dosing unit.

The feed device may be adapted to being activated on the basis of a measured temperature of at least one portion of said SCR system.

The feed device may be adapted to effecting, during operation, cooling of said dosing unit to a temperature which is below a predetermined limit value.

Said reducing agent may be a fluid solution which contains urea.

The above objects are also achieved with a motor vehicle which comprises an SCR system. The vehicle may be a truck, bus or passenger car.

An aspect of the invention proposes any platform which comprises an SCR system, e.g. a watercraft. The watercraft may be of any kind, e.g. a motorboat, a steamer, a ferry or a ship.

An aspect of the invention proposes a computer programme pertaining to SCR systems for exhaust cleaning which contains programme code for causing an electronic control unit or another computer connected to the electronic control unit to perform steps according to any of claims 1-6.

An aspect of the invention proposes a computer programme pertaining to SCR systems for exhaust cleaning which contains programme code stored on a computer-readable medium for causing an electronic control unit or another computer connected to the electronic control unit to perform steps according to any of claims 1-6.

An aspect of the invention proposes a computer programme product containing a programme code stored on a computer-readable medium for performing method steps according to any of claims 1-6 when said programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not restricted to the specific details described. Specialists having access to the teachings herein will recognise further applications, modifications and incorporations within other fields, which are within the scope of the invention.

### BRIEF DESCRIPTION OF THE DRAWINGS

For fuller understanding of the present invention and further objects and advantages of it, the detailed description set out below should be read together with the accompanying drawings, in which the same reference notations denote similar items in the various diagrams, and in which:
Figure 1 illustrates schematically a vehicle according to an embodiment of the invention;
Figure 2 illustrates schematically a subsystem for the vehicle depicted in Figure 1, according to an embodiment of the invention;
Figure 3a is a schematic diagram of operating power of a feed device as a function of time, according to an embodiment of the invention;
Figure 3b is a schematic diagram of operating power of a feed device as a function of time, according to an embodiment of the invention;
Figure 4a is a schematic flowchart of a method according to an embodiment of the invention;
Figure 4b is a more detailed schematic flowchart of a method according to an embodiment of the invention; and
Figure 5 illustrates schematically a computer according to an embodiment of the invention.

### DETAILED DESCRIPTION OF THE DRAWINGS

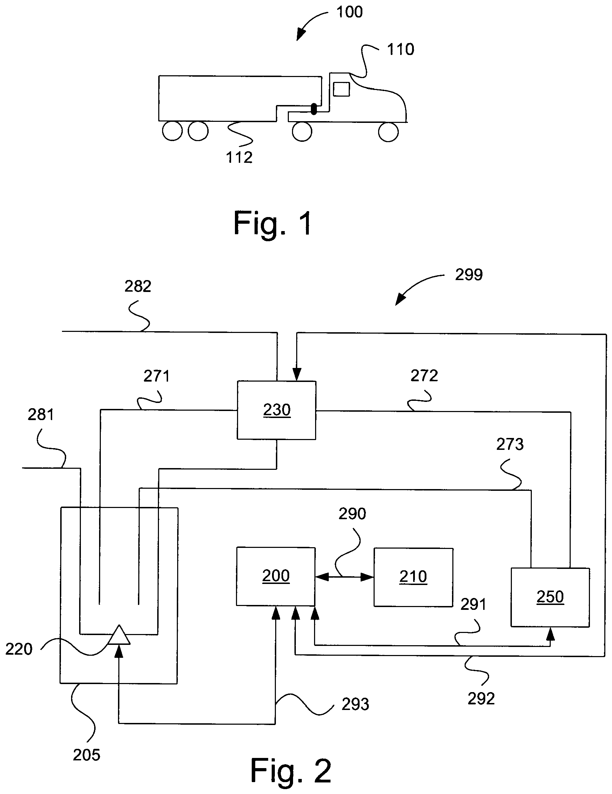

Figure 1 depicts a side view of a vehicle 100. The exemplified vehicle 100 comprises a tractor unit 110 and a trailer 112. The vehicle may be a heavy vehicle, e.g. a truck or a bus. The vehicle may alternatively be a passenger car.

It should be noted that the invention is applicable to any SCR system and is therefore not restricted to SCR systems of motor vehicles. The innovative method and the innovative SCR system according to an aspect of the invention are well suited to other platforms which have an SCR system than motor vehicles, e.g. watercraft. The watercraft may be of any kind, e.g. motorboats, steamers, ferries or ships.

The innovative method and the innovative SCR system according to an aspect of the invention are also well suited to for example, systems which comprise industrial engines and/or engine-powered industrial robots.

The innovative method and the innovative SCR system according to an aspect of the invention are also well suited to various kinds of power plants, e.g. an electric power plant comprising a diesel generator.

The innovative method and the innovative SCR system are well suited to any engine system which comprises an engine and an SCR system, e.g. on a locomotive or some other platform.

The innovative method and the innovative SCR system are well suited to any system which comprises an NOₓ generator and an SCR system.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a reducing agent in liquid form. The line may be a pipe of any suitable size. The line may be made of any suitable material, e.g. plastic, rubber or metal.

The term "reductant" or "reducing agent" refers herein to an agent used for reacting with certain emissions in an SCR system. These emissions may for example be NOx gas. The terms "reductant" and "reducing agent" are herein used synonymously. Said reductant according to a version is so-called AdBlue. Other kinds of reductants may of course be used. AdBlue is herein cited as an example of a reductant, but specialists will appreciate that the innovative method and the innovative device are feasible with other types of reductants, subject to necessary adaptations, e.g. adaptations to adequate freezing points for chosen reductants, in control algorithms for executing software code in accordance with the innovative method.

Figure 2 depicts a subsystem 299 of the vehicle 100. The subsystem 299 is situated in the tractor unit 110. The subsystem 299 may be part of an SCR system. The subsystem 299 comprises in this example a container 205 arranged to hold a reductant. The container 205 is adapted to containing a suitable amount of reductant and to being replenishable as necessary. The container might accommodate, for example, 75 or 50 litres of reductant.

A first line 271 is adapted to leading the reductant to a pump 230 from the container 205. The pump 230 may be any suitable pump. The pump 230 may be a diaphragm pump provided with at least one filter. The pump 230 is adapted to being driven by an electric motor. The pump 230 is adapted to drawing the reductant from the container 205 via the first line 271 and supplying it via a second line 272 to a dosing unit 250. The dosing unit 250 comprises an electrically controlled dosing valve by means of which a flow of reductant added to the exhaust system can be controlled. The pump 230 is adapted to pressurising the reductant in the second line 272. The dosing unit 250 is provided with a throttle unit against which said pressure of the reductant is built up in the subsystem 299.

The dosing unit 250 is adapted to supplying said reductant to an exhaust system (not depicted) of the vehicle 100. More specifically, the dosing unit 250 is adapted to supplying a suitable amount of reductant in a controlled way to an exhaust system of the vehicle 100. According to this version, an SCR catalyst (not depicted) is situated downstream of a location in the exhaust system where the reductant supply is effected. The amount of reductant supplied in the exhaust system is intended to be used in a conventional way in the SCR catalyst for reducing the amount of undesirable emissions in a known way.

The dosing unit 250 is situated adjacent to, for example, an exhaust pipe which is adapted to leading exhaust gases from a combustion engine (not depicted) of the vehicle 100 to the SCR catalyst. The dosing unit 250 is situated in thermal contact with the exhaust system of the vehicle 100. This means that thermal energy stored in, for example, an exhaust pipe, silencer and SCR catalyst can thus be led to the dosing unit.

The dosing unit 250 is provided with an electronic control card which is adapted to handling communication with a control unit 200. The dosing unit 250 comprises also plastic and/or rubber components which might melt or be otherwise adversely affected as a result of too high temperatures.

The dosing unit 250 is sensitive to temperatures above a certain value, e.g. 120 degrees Celsius. As for example the exhaust pipe, the silencer and the SCR catalyst of the vehicle 100 exceed this temperature value, there is risk that the dosing unit might become overheated during or after operation of the vehicle if not provided with cooling.

A third line 273 runs between the dosing unit 250 and the container 205. The third line 273 is adapted to leading back to the container 205 a certain amount of the reductant fed to the dosing valve 250. This configuration achieves with advantage cooling of the dosing unit 250. The dosing unit 250 is thus cooled by a flow of the reductant as it is pumped through the dosing unit 250 from the pump 230 to the container 205.

A first radiator liquid line 281 is adapted to holding and conveying coolant for an engine of the vehicle 100. The first radiator liquid line 281 is partly situated in the container 205 in order to warm the reductant present therein if the reductant is cold. In this example, the first radiator liquid line 281 is adapted to leading radiator liquid which has been warmed by the vehicle's engine in a closed circuit through the container 205 to the pump 230. A second radiator liquid line 282 is adapted to leading radiator liquid back from the pump 230 to the engine of the vehicle 100. According to a version, the first radiator liquid line 281 is configured with a substantially U-shaped portion situated in the container 205, as schematically depicted in Figure 2. This configuration achieves improved warming of the reductant in the container 205 when the reductant is at too low a temperature to function in a desirable way. It should be noted that the first radiator liquid line 281 may be of any suitable configuration. If the reductant is at a temperature which exceeds a predetermined value, warming of the reductant by the radiator liquid is deactivated automatically.

A first control unit 200 is arranged for communication with a temperature sensor 220 via a link 293. The temperature sensor 220 is adapted to detecting a prevailing temperature of the reductant where the sensor is fitted. According to this version, the temperature sensor 220 is situated at a bottom of the substantially U-shaped configuration of the first radiator liquid line 281. The temperature sensor 220 is adapted to continuously sending signals to the first control unit 200 which contain information about a prevailing temperature of the reductant.

According to an alternative, the temperature sensor 220 is situated adjacent to the dosing unit 250 in order to detect a prevailing temperature there. According to another version, the temperature sensor 220 is situated adjacent to the SCR catalyst of the SCR system in order to detect a prevailing temperature there. Any desired number of temperature sensors may be provided in the subsystem 299 to detect a prevailing temperature adjacent thereto. The temperature sensor/sensors 220 is/are adapted to detecting at a suitable location within the subsystem 299 a prevailing temperature which may serve as a basis for controlling operation of the pump 230 in order to cool the dosing unit by means of said flow of reductant.

The first control unit 200 is arranged for communication with the pump 230 via a link 292. The first control unit 200 is adapted to controlling operation of the pump 230 in order for example to regulate the reductant flows within the subsystem 299.

The first control unit 200 is arranged for communication with the dosing unit 250 via a link 291. The first control unit 200 is adapted to controlling operation of the dosing unit 250 in order for example to regulate the reductant supply to the exhaust system of the vehicle 100. The first control unit 200 is adapted to controlling operation of the dosing unit 250 in order for example to regulate the reductant return supply to the container 205.

The first control unit 200 is adapted, according to a version, to using the signals received which contain a prevailing temperature of the reductant in the region of the temperature sensor 220 and/or a prevailing temperature of any desired component of the SCR system or the subsystem 299 as a basis for controlling the pump 230 in accordance with an aspect of the innovative method. In particular, the first control unit 200 is adapted, according to a version, to using the signals received which contain a prevailing temperature of the reductant in the region of the temperature sensor 220 and/or a prevailing temperature of any desired component of the SCR system or the subsystem 299 as a basis for controlling operation of the pump 230 at reduced power compared with ordinary operation after cessation of an exhaust flow from the engine, in accordance with an aspect of the innovative method.

A second control unit 210 is arranged for communication with the first control unit 200 via a link 290. The second control unit 210 may be detachably connected to the first control unit 200. The second control unit 210 may be a control unit external to the vehicle 100. The second control unit 210 may be adapted to performing the innovative method steps according to the invention. The second control unit 210 may be used to cross-load software to the first control unit 200, particularly software for applying the innovative method. The second control unit 210 may alternatively be arranged for communication with the first control unit 200 via an internal network in the vehicle. The second control unit 210 may be adapted to performing substantially similar functions to those of the first control unit 200, e.g. using the signals received which contain a prevailing temperature of the reductant in the region of the temperature sensor 220 and/or a prevailing temperature of any desired component of the SCR system or the subsystem 299 as a basis for controlling operation of the pump 230 at reduced power compared with ordinary operation after cessation of an exhaust flow from the engine. It should be noted that the innovative method may be applied by either the first control unit 200 or the second control 210 or by both the first control unit 200 and the second control unit 210.

According to the embodiment schematically illustrated in Figure 2, the first control unit 200 is adapted to controlling operation of the pump 230 at reduced power compared with ordinary operation after cessation of an exhaust flow from the engine in such a way that any amount of electrical energy which may be needed for cooling the dosing unit 250 to a critical temperature as regards safety is less than in the state of the art.

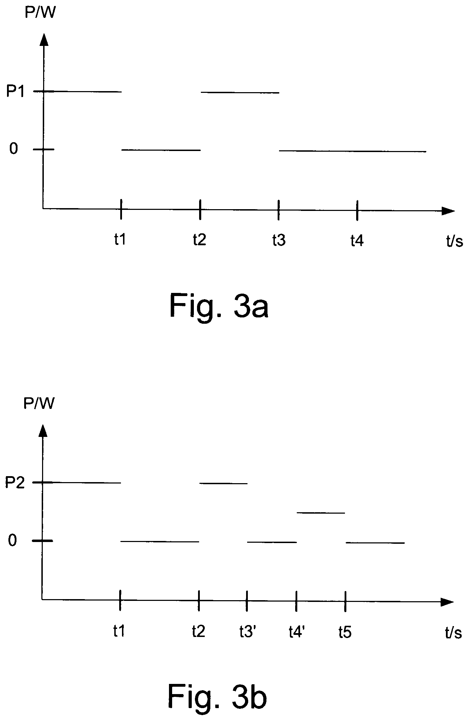

Figure 3a is a schematic diagram of an operating power P of the feed device as a function of time t, according to an embodiment of the invention.

The diagram illustrates schematically how the feed device 230 may be run on the basis of a first predetermined interval configuration. According to the first interval configuration, the feed device 230 continues, where a need for cooling of the dosing unit 250 is found after cessation of the exhaust flow, to be run at an ordinary operating power P1 until a first time t1. Between the first time t1 and a second time the operating power P of the feed device 230 is zero (0) and the feed device is therefore off or idling. After the second time t2 the feed device 230 is run at an ordinary operating power P1 until a third time t3. After the third time t3, the operating power P of the feed device 230 is zero (0) and the feed device is therefore off or idling. At a fourth time it is found that predetermined criteria are fulfilled and the feed device therefore continues to be off. At the fourth time t4 it is found that it will not be possible for a prevailing temperature of the dosing unit 250 to be increased by rewarming effects to too high a temperature at which there would be risk of its functional degradation.

According to the first predetermined interval configuration, the period t1-t2 and the period t2-t3 are of substantially equal duration.

It should be noted that various periods of operation and non-operation of the feed device in a predetermined interval configuration may differ in length according to a version. It should also be noted that an interval configuration may also have any desired number of periods of operation and non-operation of the feed device. According to a version, the periods relating to operation of the feed device (e.g. the period t2-t3) are within a range of 30 to 90 seconds. According to a version, the periods relating to operation of the feed device (e.g. the period t2-t3) are within a range of 1 to 5 minutes. According to a version, the periods relating to operation of the feed device (e.g. the period t2-t3) are shorter than one (1) minute. According to a version, the periods relating to operation of the feed device (e.g. the period t2-t3) are longer than five (5) minutes.

According to a version, the predetermined interval configuration has a length of the order of 30 minutes. The predetermined interval configuration may be shorter than 30 minutes. The predetermined interval configuration may be longer than 30 minutes.

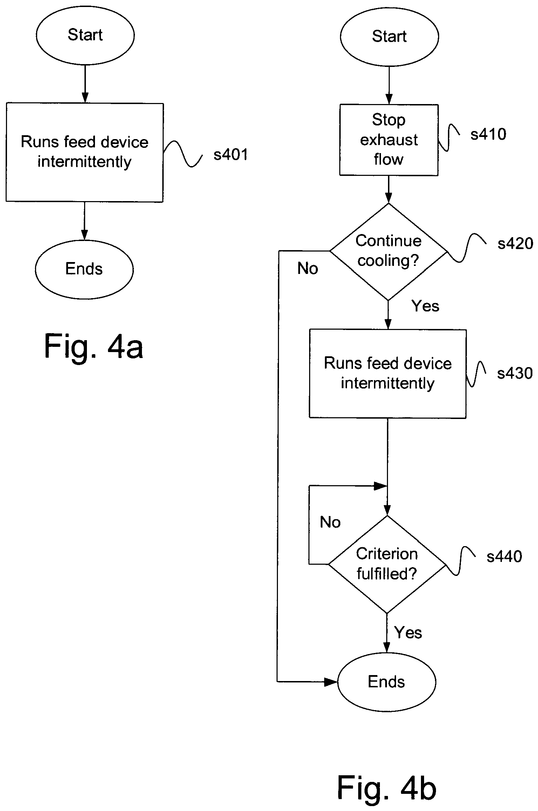

A version of the invention determines at any desired times in an interval configuration whether a predetermined criterion is fulfilled, in which case switching off of the feed device 230 may be effected on that basis. Said predetermined criterion is described in more detail with reference to Figure 4b below.

Figure 3b is a schematic diagram of operating power of the feed device as a function of time, according to an embodiment of the invention.

It illustrates schematically how the feed device 230 may be run on the basis of a second predetermined interval configuration. According to the second interval configuration, the feed device 230 continues, where a need for cooling of the dosing unit 250 is determined after cessation of the exhaust flow, to be run at a reduced operating power P2, compared with ordinary operation, until a first time t1. Between the first time t1 and a second time the operating power P of the feed device 230 is zero (0) and the feed device is therefore off or idling. After the second time t2 the feed device 230 is run at operating power P2 until a third time t3'. The period t2-t3' is shorter than the period t2-t3 described with reference to Figure 3a. After the third time t3', the operating power P of the feed device 230 is zero (0) until a fourth time t4' and the feed device is therefore off or idling. The period t3'-t4' is shorter than the period t3-t4 described with reference to Figure 3a. After the fourth time t4' the feed device 230 is run at further reduced operating power until a fifth time t5. At the fifth time t5 it is found that predetermined criteria are fulfilled and the feed device then continues to be off, whereupon the operating power becomes zero (0). At the fifth time t5 it is found that it will not be possible for a prevailing temperature of the dosing unit 250 to be increased by rewarming effects to too high a temperature at which there would be risk of its functional degradation.

Figure 4a is a schematic flowchart of a method for cooling a dosing unit pertaining to SCR systems for exhaust cleaning, according to an embodiment of the invention. The method comprises a first step s401. Method step s401 comprises, after cessation of exhaust flow, the steps of cooling a reducing agent dosing unit by means of reducing agent supplied to it, and of intermittently running a feed device to supply said coolant reducing agent, and running said feed device at reduced power compared with ordinary operation. The method ends after step s401.

Figure 4b is a schematic flowchart of a method pertaining to SCR systems for exhaust cleaning, according to an embodiment of the invention.

The method comprises a first step s410. Method step s410 comprises the step of shutting off an exhaust flow from a combustion engine of the vehicle 100. At this stage, the dosing unit 250 is cooled in an ordinary way, i.e. at an operating power of the pump 230 which is needed to maintain the same cooling flow of the dosing unit as during ordinary operation. Shutting off the exhaust flow is effected by switching off the engine of the vehicle 100. Step s410 is followed by a step s420.

Method step s420 comprises the step of evaluating whether there is a continuing need to cool the dosing unit by means of a flow of the reductant in the SCR system. The step of deciding whether there is a need to continue said cooling may be based on various parameters. According to an example, deciding whether there is a continuing need for cooling is based on the signals from the temperature sensor 220 which contain information about a prevailing temperature of at least one component of the SCR system or the subsystem 299 of the vehicle 100. If there is no continuing need for cooling, the method ends. If there is a continuing need for cooling, a subsequent step s430 is performed.

Method step s430 comprises the step of influencing the operation of the pump 230 in such a way that it is run intermittently. According to a version, the pump 230 is run intermittently with a predetermined interval configuration. According to a version, the pump 230 is run intermittently at an operating power corresponding to that of ordinary operation. According to a version, the pump 230 is run intermittently at a reduced operating power compared with that employed for maintaining a cooling flow of the dosing unit 250 during ordinary operation. Step s430 is followed by a step s440.

Method step s440 comprises the step of deciding whether a predetermined criterion is fulfilled. The predetermined criterion may be any desired criterion. Said criterion may be related to a predetermined interval configuration. Said criterion may be related to a measured temperature of at least one portion of said SCR system. Said criterion may be related to rewarming effects of at least one portion of said SCR system. The predetermined criterion may thus be fulfilled if the operating power of the pump 230 has been controlled in accordance with the predetermined interval configuration, in which case it may be assumed that the dosing unit 250 has reached a desired temperature at which it needs no further cooling. If a predetermined temperature of at least one portion of the SCR system is reached, after the pump 230 has been run intermittently in a certain way, it may be assumed that the dosing unit 250 has reached a desired temperature at which it needs no further cooling. If it is decided at step s440 that the predetermined criterion is fulfilled, the method ends. If it is decided at step s440 that the predetermined criterion is not fulfilled, the pump 230 continues to be run intermittently, possibly also at reduced power compared with ordinary operation, and step s440 is performed again. The method ends after step s440.

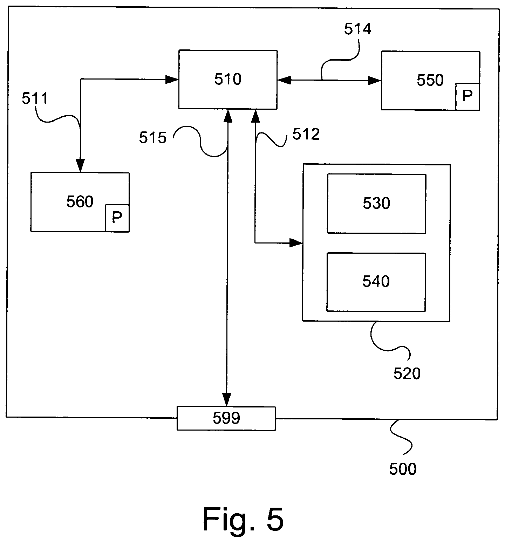

Figure 5 is a diagram of a version of a device 500. The control units 200 and 210 described with reference to Figure 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P comprises routines for, after cessation of exhaust flow, cooling the reducing agent dosing unit by means of reducing agent supplied to it, and for intermittently running a feed device to supply said coolant reducing agent, and for running said feed device at reduced power compared with ordinary operation, according to the innovative method. The programme P may be stored in an executable form or in a compressed form in a memory 560 and/or in a read/write memory 550.

Where the data processing unit 510 is described as performing a certain function, it means that the data processing unit 510 effects a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514. The data port 599 may for example have the links 290, 291, 292 and 293 connected to it (see Figure 2).

When data are received on the data port 599, they are stored temporarily in the second memory element 540. When input data received have been temporarily stored, the data processing unit 510 is prepared to effect code execution as described above. According to a version, signals received on the data port 599 contain information about a prevailing temperature of at least one portion of the SCR system. The signals received on the data port 599 may be used by the device 500 to run the pump 230 intermittently according to an aspect of the invention. The signals received on the data port 599 may used by the device 500 to run the pump 230 intermittently with a predetermined interval configuration, according to an aspect of the invention. The signals received on the data port 599 may be used by the device 500 to run the pump 230 intermittently at reduced operating power compared with ordinary operation and, where applicable, with a predetermined interval configuration, according to an aspect of the invention.

Parts of the methods herein described may be effected by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive or to restrict the invention to the variants described. Many modifications and variations will obviously be apparent to one skilled in the art. The embodiments have been chosen and described in order best to explain the principles of the invention and its practical applications and hence make it possible for specialists to understand the invention for various embodiments and with the various modifications appropriate to the intended use.

## Claims

1. A method for cooling a dosing unit (250) pertaining to SCR systems for exhaust cleaning, comprising a dosing unit (250) for reducing agent and a feed device (230) for said reducing agent, whereby said feed device (230) is arranged to pump reducing agent from a container (205) via a first line (271), and via a second line (272) supply said reducing agent to said dosing unit (250), and where a third line (273) is arranged between said dosing unit (250) and said container (205), whereby said third line is adapted to leading back a certain amount of the reducing agent fed to the dosing unit (250) to said container (205), comprising the steps of:
- cooling said reducing agent dosing unit (250) by means of reducing agent supplied to said dosing unit (250), whereby, at ordinary operation a return flow from said dosing unit (50) to said container (205) is essentially constant, and
- after cessation of exhaust flow, intermittently running said feed device (230), whereby operation of said feed device (230) being deactivated at certain periodicities and being subsequently reactivated, to supply said reducing agent to said dosing unit (250), and running said feed device (230) at reduced power compared with ordinary operation, whereby a lower pressure towards said reducing agent dosing unit (250) compared with ordinary operation is achieved.

2. A method according to claim 1, whereby the feed device (230) is run intermittently with a predetermined interval configuration.

3. A method according to claim 2, whereby said predetermined interval configuration entails catering for rewarming effects of said dosing unit.

4. A method according to any one of the foregoing claims, whereby operation of the feed device (230) is activated on the basis of a measured temperature of at least one portion of said SCR system.

5. A method according to any one of the foregoing claims, whereby operation of the feed device (230) results in cooling of said dosing unit to a temperature which is below a predetermined limit value.

6. A method according to any one of the foregoing claims, in which said reducing agent is a fluid solution which contains urea.

7. An SCR system for exhaust cleaning which comprises a coolable dosing unit (250) and a feed device (230) for said reducing agent, whereby said feed device (230) is arranged to pump reducing agent from a container (205) via a first line (271), and via a second line (272) supply said reducing agent to said dosing unit (250), and where a third line (273) is arranged between said dosing unit (250) and said container (205), whereby said third line is adapted to leading back a certain amount of the reducing agent fed to the dosing unit (250) to said container (205), whereby said reducing agent dosing unit (250) is cooled by said reducing agent intended to be supplied to said dosing unit,
**characterized in that** the SCR system is configured such that at ordinary operation a return flow from said dosing unit (250) to said container (205) is essentially constant, and the SCR system comprises means (200; 210; 500) for after cessation of an exhaust flow, intermittently running said feed device (230), whereby operation of the feed device (230) being deactivated at certain periodicities and being subsequently reactivated, to supply said reducing agent, for which purpose the feed device (230) is adapted to being run at reduced power compared with ordinary operation, whereby a lower pressure towards said reducing agent dosing unit (250) compared with ordinary operation is achieved.

8. An SCR system according to claim 7, in which the feed device (230) is adapted to being run intermittently with a predetermined interval configuration.

9. An SCR system according to claim 8, in which said predetermined interval configuration entails catering for rewarming effects of said dosing unit.

10. An SCR system according to any one of claims 7-9, in which the feed device (230) is adapted to being activated on the basis of a measured temperature of at least one portion of said SCR system.

11. An SCR system according to any one of claims 7-10, in which the feed device (230), during operation, is adapted to effecting cooling of said dosing unit (250) to a temperature which is below a predetermined limit value.

12. An SCR system according to any one of claims 7-11, in which said reducing agent is a fluid solution which contains urea.

13. A motor vehicle (100; 110) comprising an SCR system according to any one of claims 7-12.

14. A motor vehicle (100; 110) according to claim 13, which vehicle is any from among truck, bus or passenger car.

15. A computer programme (P) pertaining to SCR systems for exhaust cleaning which contains programme code (P) for causing an electronic control unit (200; 500) or another computer (210; 500) connected to the electronic control unit (200; 500) to perform the steps of the method according to any of claims 1-6.

16. A computer programme product containing a programme code stored on a computer-readable medium for performing the steps of the method according to any of claims 1-6 when said programme code is run on an electronic control unit (200; 500) or another computer (210; 500) connected to the electronic control unit (200; 500)

## Patentansprüche

1. Verfahren zum Kühlen einer Dosiereinheit (250) für SCR-Systeme zur Abgasreinigung, mit einer Dosiereinheit (250) für Reduktionsmittel und mit einer Zuführungseinrichtung (230) für das Reduktionsmittel, wobei die Zuführungseinrichtung (230) dazu eingerichtet ist, Reduktionsmittel von einem Behälter (205) über eine erste Leitung (271) zu pumpen und über eine zweite Leitung (272) das Reduktionsmittel für die Dosiereinheit (250) bereitzustellen, und wobei eine dritte Leitung (273) zwischen der Dosiereinheit (250) und dem Behälter (205) angeordnet ist, wobei die dritte Leitung (273) dazu vorgesehen ist, eine bestimmte Menge des der Dosiereinheit (250) zugeführten Reduktionsmittels zurückzuleiten, umfassend die Verfahrensschritte:
- Kühlen der Reduktionsmittel-Dosiereinheit (250) mittels des der Dosiereinheit (250) zugeführten Reduktionsmittels, wobei, bei gewöhnlichem Betrieb, ein Rückfluss von der Dosiereinheit (250) zu dem Behälter (205) zumindest im Wesentlichen konstant ist und
- nach Wegfall eines Abgasflusses intermittierendes Betreiben der Zuführungseinrichtung (230), wobei ein Betrieb der Zuführungseinrichtung (230) zu bestimmten Periodizitäten deaktiviert und anschließend reaktiviert wird, um das Reduktionsmittel der Dosiereinheit (250) bereitzustellen, und wobei die Zuführungseinrichtung (230) mit reduzierter Leistung im Vergleich zu dem gewöhnlichen Betrieb betrieben wird, wobei ein geringerer Druck gegenüber der Reduktionsmittel-Dosiereinheit (250) im Vergleich zu dem gewöhnlichen Betrieb erzielt wird.

2. Verfahren nach Anspruch 1, wobei die Zuführungseinrichtung (230) intermittierend mit einer vorgegebenen I ntervallkonfiguration betrieben wird.

3. Verfahren nach Anspruch 2, wobei die I ntervallkonfiguration eine Abstimmung bezüglich Wiederaufwärmungseffekten der Dosiereinheit mit sich bringt.

4. Verfahren nach einem der vorhergehenden Ansprüche, wobei ein Betrieb der Zuführungseinrichtung (230) auf der Grundlage einer gemessenen Temperatur zumindest eines Teils des SCR-Systems aktiviert wird.

5. Verfahren nach einem der vorhergehenden Ansprüche, wobei der Betrieb der Zuführungseinrichtung (230) zu einer Abkühlung der Dosiereinheit auf eine Temperatur, die unterhalb eines vorgegebenen Grenzwerts liegt, führt.

6. Verfahren nach einem der vorhergehenden Ansprüche, wobei das Reduktionsmittel eine flüssige Lösung ist, die Harnstoff enthält.

7. SCR-System zur Abgasreinigung mit einer kühlbaren Dosiereinheit (250) und mit einer Zuführungseinrichtung (230) für das Reduktionsmittel, wobei die Zuführungseinrichtung (230) dazu eingerichtet ist, Reduktionsmittel von einem Behälter (205) über eine erste Leitung (271) zu pumpen und über eine zweite Leitung (272) das Reduktionsmittel für die Dosiereinheit (250) bereitzustellen, und wobei eine dritte Leitung (273) zwischen der Dosiereinheit (250) und dem Behälter (205) angeordnet ist, wobei die dritte Leitung (273) dazu vorgesehen ist, eine bestimmte Menge des der Dosiereinheit (250) zugeführten Reduktionsmittels zurückzuleiten, wobei die Reduktionsmittel-Dosiereinheit (250) mittels des zur Bereitstellung für die Dosiereinheit (250) vorgesehenen Reduktionsmittels gekühlt wird, **dadurch gekennzeichnet, dass** das SCR-System derart konfiguriert ist, dass bei gewöhnlichem Betrieb ein Rückfluss von der Dosiereinheit (250) zu dem Behälter (205) im Wesentlichen konstant ist und das SCR-System Mittel (200; 210; 500) zum intermittierenden Betrieb der Zuführungseinrichtung (230) nach Wegfall eines Abgasflusses aufweist, wobei ein Betrieb der Zuführungseinrichtung (230) zu bestimmten Periodizitäten deaktiviert und anschließend reaktiviert wird, um das Reduktionsmittel bereitzustellen, wozu die Zuführungseinrichtung (230) dazu vorgesehen ist, mit im Vergleich zu gewöhnlichem Betrieb reduzierter Leistung betrieben zu werden, wobei ein geringerer Druck gegenüber der Reduktionsmittel-Dosiereinheit (250) im Vergleich zu gewöhnlichem Betrieb erzielt wird.

8. SCR-System nach Anspruch 7, bei welchem die Zuführungseinrichtung (230) dazu vorgesehen ist, intermittierend mit einer vorgegebenen Intervall-Konfiguration betrieben zu werden.

9. SCR-System nach Anspruch 8, bei welchem die I ntervallkonfiguration eine Abstimmung bezüglich Wiederaufwärmungseffekten der Dosiereinheit mit sich bringt.

10. SCR-System nach einem der Ansprüche 7 bis 9, in welchem die Zuführungseinrichtung (230) dazu vorgesehen ist, auf der Grundlage einer gemessenen Temperatur zumindest eines Teils des SCR-Systems aktiviert zu werden.

11. SCR-System nach einem der Ansprüche 7 bis 10, in welchem die Zuführungseinrichtung (230) während eines Betriebs dazu vorgesehen ist, eine Abkühlung der Dosiereinheit (250) auf eine Temperatur, die unterhalb eines vorgegebenen Grenzwerts liegt, zu bewirken.

12. SCR-System nach einem der Ansprüche 7 bis 11, in welchem das Reduktionsmittel eine flüssige Lösung ist, die Harnstoff enthält.

13. Kraftfahrzeug (100; 110) mit einem SCR-System nach einem der Ansprüche 7 bis 12.

14. Kraftfahrzeug (100; 110) nach Anspruch 13, bei welchem es sich um eines unter Lastwagen, Bus oder Personenfahrzeug handelt.

15. Computerprogramm (P) für SCR-Systeme zur Abgasreinigung, welches Programmcode (P) zur Veranlassung einer elektronischen Steuereinheit (200; 500) oder eines mit der elektronischen Steuereinheit (200; 500) verbundenen anderen Computers (210; 500) zur Durchführung der Verfahrensschritte des Verfahrens nach einem der Ansprüche 1 bis 6 beinhaltet.

16. Computerprogrammprodukt mit einem auf einem computerlesbaren Medium gespeicherten Programmcode zur Durchführung der Verfahrensschritte des Verfahrens nach einem der Ansprüche 1 bis 6, wenn der Programmcode auf einer elektronischen Steuereinheit (200; 500) oder einem anderen mit der elektronischen Steuereinheit (200; 500) verbundenen Computer (210; 500) ausgeführt wird.

## Revendications

1. Procédé pour refroidir une unité de dosage (250) relatif à des systèmes RCS pour un nettoyage d'échappement, comprenant une unité de dosage (250) pour un agent réducteur et un dispositif d'alimentation (230) pour ledit agent réducteur, dans lequel ledit dispositif d'alimentation (230) est agencé pour pomper l'agent réducteur à partir d'un conteneur (205) via une première ligne (271), et via une deuxième ligne (272) délivrant ledit agent réducteur dans ladite unité de dosage (250), et dans lequel une troisième ligne (273) est agencée entre ladite unité de dosage (250) et ledit conteneur (205), dans lequel ladite troisième ligne est adaptée pour renvoyer une certaine quantité de l'agent réducteur alimenté dans l'unité de dosage (250) vers ledit conteneur (205), comprenant les étapes consistant à:
- refroidir ladite unité de dosage d'agent réducteur (250) au moyen d'un agent réducteur délivré dans ladite unité de dosage (250), de sorte que, en fonctionnement ordinaire, un flux de retour allant de ladite unité de dosage (50) vers ledit conteneur (205) est essentiellement constant, et
- après l'arrêt du flux d'échappement, actionner par intermittence ledit dispositif d'alimentation (230), dans lequel le fonctionnement dudit dispositif d'alimentation (230) étant désactivé à certaines périodicités et étant ensuite réactivé, pour délivrer ledit agent réducteur dans ladite unité de dosage (250), et actionner ledit dispositif d'alimentation (230) à puissance réduite par rapport au fonctionnement ordinaire, de sorte qu'une pression inférieure vers ladite unité de dosage d'agent réducteur (250) est obtenue par comparaison au fonctionnement ordinaire.

2. Procédé selon la revendication 1, dans lequel le dispositif d'alimentation (230) est actionné par intermittence avec une configuration d'intervalle prédéterminée.

3. Procédé selon la revendication 2, dans lequel ladite configuration d'intervalle prédéterminée entraîne la restauration d'effets de réchauffement de ladite unité de dosage.

4. Procédé selon l'une quelconque des revendications précédentes, dans lequel le fonctionnement du dispositif d'alimentation (230) est activé sur la base d'une température mesurée d'au moins une partie dudit système RCS.

5. Procédé selon l'une quelconque des revendications précédentes, dans lequel le fonctionnement du dispositif d'alimentation (230) entraîne le refroidissement de ladite unité de dosage à une température qui est inférieure à une valeur limite prédéterminée.

6. Procédé selon l'une quelconque des revendications précédentes, dans lequel ledit agent réducteur est une solution fluide qui contient de l'urée.

7. Système RCS pour un nettoyage d'échappement qui comprend une unité de dosage pouvant être refroidie (250) et un dispositif d'alimentation (230) pour ledit agent réducteur, de sorte que ledit dispositif d'alimentation (230) est agencé pour pomper l'agent réducteur à partir d'un conteneur (205) via une première ligne (271), et via une deuxième ligne (272) délivrant ledit agent réducteur dans ladite unité de dosage (250), et dans lequel une troisième ligne (273) est agencée entre ladite unité de dosage (250) et ledit conteneur (205) de sorte que ladite troisième ligne est adaptée pour renvoyer une certaine quantité de l'agent réducteur alimenté dans l'unité de dosage (250) vers ledit conteneur (205), de sorte que ladite unité de dosage d'agent réducteur (250) est refroidie par ledit agent réducteur destiné à être délivré dans ladite unité de dosage,
**caractérisé en ce que** le système RCS est configuré de sorte qu'en fonctionnement ordinaire, un flux de retour allant de ladite unité de dosage (250) vers ledit conteneur (205) est essentiellement constant,
et le système RCS comprend des moyens (200 ; 210 ; 500) pour, après arrêt du flux d'échappement, actionner par intermittence ledit dispositif d'alimentation (230), dans lequel le fonctionnement du dispositif d'alimentation (230) étant désactivé à certaines périodicités et étant ensuite réactivé pour délivrer ledit agent réducteur, dans ce but, le dispositif d'alimentation (230) est adapté pour être actionné à une puissance réduite par rapport au fonctionnement ordinaire, de sorte qu'une pression inférieure vers ladite unité de dosage d'agent réducteur (250) est obtenue par comparaison au fonctionnement ordinaire.

8. Système RCS selon la revendication 7, dans lequel le dispositif d'alimentation (230) est adapté pour être actionné par intermittence avec une configuration d'intervalle prédéterminée.

9. Système RCS selon la revendication 8, dans lequel ladite configuration d'intervalle prédéterminée entraine la restauration d'effets de réchauffement de ladite unité de dosage.

10. Système RCS selon l'une quelconque des revendications 7 à 9, dans lequel le dispositif d'alimentation (230) est adapté pour être activé sur la base d'une température mesurée d'au moins une partie dudit système RCS.

11. Système RCS selon l'une quelconque des revendications 7 à 10, dans lequel le dispositif d'alimentation (230), en cours de fonctionnement, est adapté pour effectuer un refroidissement de ladite unité de dosage (250) à une température qui est inférieure à une valeur limite prédéterminée.

12. Système RCS selon l'une quelconque des revendications 7 à 11, dans lequel ledit agent réducteur est une solution fluide qui contient de l'urée.

13. Véhicule à moteur (100; 110) comprenant un système RCS selon l'une quelconque des revendications 7 à 12.

14. Véhicule à moteur (100 ; 110) selon la revendication 13, lequel véhicule est l'un quelconque parmi un camion, un autobus ou une voiture de tourisme.

15. Programme informatique (P) relatif à des système RCS pour un nettoyage de gaz d'échappement qui contient un code de programme (P) pour amener une unité de commande électronique (200 ; 500) ou un autre ordinateur (210 ; 500) connecté à l'unité de commande électronique (200 ; 500) à effectuer les étapes du procédé selon l'une quelconque des revendications 1 à 6.

16. Produit de programme informatique contenant un code de programme stocké sur un support lisible par ordinateur pour effectuer les étapes du procédé selon l'une quelconque des revendications 1 à 6, lorsque ledit code de programme est exécuté sur une unité de commande électronique (200 ; 500) ou un autre ordinateur (210 ; 500) connecté à l'unité de commande électronique (200 ; 500).
